# EUROPÄISCHE PATENTSCHRIFT

(11) **EP 2 845 946 B1**
(45) Veröffentlichungstag und Bekanntmachung des Hinweises auf die Patenterteilung: **21.02.2018**
(21) Anmeldenummer: 14183185.9
(22) Anmeldetag: 02.09.2014
(51) Int. Cl.: D21C 5/02, D21F 1/66, D21F 1/70

(54) **Verfahren zur Reinigung von Partikeln aus einem Altpapierdeinkingprozess**
Method for the cleaning of particles from waste paper deinking process
Procedé de purification de particules obtenues à partir d'un procédé de désencrage

(30) Priorität: 06.09.2013 DE 102013217872
(43) Veröffentlichungstag der Anmeldung: 11.03.2015
(73) Patentinhaber: Leibniz-Institut für Polymerforschung Dresden e.V., 01069 Dresden (DE)
(72) Erfinder: Schwarz, Simona, 01468 Moritzburg (DE); Petzold, Gudrun, 01257 Dresden (DE); Oelmann, Marina, 01945 Guteborn (DE)
(74) Vertreter: Rauschenbach, Marion

(56) Entgegenhaltungen:
- DE-A1-102012 208 219
- DE-C1- 3 605 259
- US-A- 4 076 578
- US-A1- 2003 164 336

## Beschreibung

Die Erfindung bezieht sich auf die Gebiete der Chemie und der Verfahrenstechnik und betrifft ein Verfahren zur Reinigung von Partikeln, die aus einem Altpapierdeinkingprozess stammen, und die beispielsweise beim Deinkingprozess der Altpapieraufbereitung eingesetzt worden oder vorhanden sind und gereinigt werden können.

Bei der Herstellung von Papier, Karton und Pappe werden natürliche Fasern verwendet, wobei zwischen Primär- oder Sekundärfasern unterschieden wird. Erste werden zum weitaus größten Teil aus Holz, letztere aus Altpapieren gewonnen, das selbst aus sehr unterschiedlichen Quellen stammen kann. Im Jahr 2010 lag der Einsatz von Altpapier, bezogen auf die Papierproduktion, in Deutschland bei 70 %, was die Wichtigkeit dieses Rohstoffs für die deutsche Papierindustrie unterstreicht.

Typischerweise muss das Altpapier nach seiner Sammlung und Lagerung zunächst von Verunreinigungen wie Metall, Sand, Glas und Kunststoffen befreit werden, bevor es in den Auflöseaggregaten unter der Wirkung von Wasser und einer geringen Menge an chemischen Hilfsstoffen zerfasert wird.

Wenn aus dem Altpapier graphische Papiere hergestellt werden sollen, stellt die Entfernung von Druckfarben, welche durch den typischen Gebrauch von Papier als Informationsträger an den Altpapierfasern haften einen wesentlichen und unverzichtbaren Bestandteil der Prozesskette dar (Deinking). Ziel ist es hierbei, die Farbe möglichst vollständig von den Fasern abzulösen und anschließend aus der Stoffsuspension auszutragen. Der Druckfarbenaustrag erfolgt nach dem aktuellen Stand der Technik in sogenannten Flotationszellen, wo durch das Einblasen kleiner Luftbläschen, an welchen die abgelösten Druckfarbenpartikel anhaften, ein beladener Schaum erzeugt wird, der dann abgezogen werden kann. Neben den abgelösten Druckfarbenbestandteilen sollen auch weitere Schmutz- und Störstoffe (wie auch Mineralöle) aus der Suspension entfernt werden.

Um akzeptable Austrageraten der Druckfarben zu erreichen, sind heute die Prozesse der Druckfarbenentfernung oft mehrstufig ausgeführt und durch häufiges Verdünnen und Eindicken der Faserstoffsuspension gekennzeichnet. Der Kernprozess des Deinkings, die Flotation, wird bei sehr geringen Stoffdichten (ca. 1 %) betrieben. D. h., beim Transport und bei der Bearbeitung von 1 kg Faserstoff müssen gleichzeitig 99 kg Wasser mitbewegt werden. Zwangsläufig geht dies zum einen mit einem enormen Verbrauch an Elektroenergie für Pumpen und periphere Aggregaten einher, andererseits aber auch mit einem hohen Wasserverbrauch.
Ein weiterer wichtiger Prozessschritt bei der Altpapieraufbereitung für grafische Papiere ist die Dispergierung, welche nach einer Eindickung der Faserstoffsuspension auf etwa 30 Gew.-% erfolgt. Die eingedickte Altpapiersuspension wird im Dispergierschritt des Recyclingverfahrens kräftig durchmischt, wodurch die Fasern stark aneinander reiben. Aufgrund der starken Faser-Faser-Reibung werden noch an den Fasern haftende Druckfarbenteilchen von den Fasern getrennt, fein zermahlen und homogen in der Altpapiersuspension verteilt. Anschließend kann eine Bleiche der Altpapiersuspension mit Chemikalien erfolgen.

Bis zur Erreichung der zu erzielenden Güte oder des erwünschten Weißgrades werden die zuvor genannten Prozessschritte wiederholt, damit eine Verarbeitung zu hellem Papier erfolgen kann.

Der oben beschriebene Prozess der Altpapieraufbereitung mit der Druckfarbenentfernung ist vor allem durch den häufigen Wechsel der Suspensionsstoffdichte sowie der überwiegend insgesamt niedrigen Stoffdichte besonders energieintensiv (Pumpenenergie).
Jedes Verfahrenskonzept, das die Erhöhung der Stoffdichte oder die Reduktion der Zahl der einzelnen Verfahrensschritte erlaubt, würde somit ein erhebliches Energie-Einsparpotenzial erschließen.

In der US 2012/0031573 A1 wird ein Verfahren zum Deinking von Altpapier angegeben, bei welchem die Verwendung einer Mischung aus einem Tensid und einer hydrophoben Deinkingkomponente auf der Basis von Kaolin beschrieben ist. Der Deinkingprozess wird durch Waschen oder Flotation durchgeführt.

Gemäß der US 2007/0284067 A1 ist weiterhin ein Verfahren zum Deinking von Altpapier bekannt, bei welchem die Verwendung einer Mischung aus einem Tensid und einer Deinkingkomponente auf Mineralbasis beschrieben ist.

Weiterhin ist ein Verfahren unter dem Begriff Adsorptionsdeinking bekannt, welche Nachteile der bekannten Wasch- und Flotations-Deinking-Prozesse verbessert (T. Handke, et al: Wochenblatt für Papierfabrikation 140, Nr. 7 2012, S. 534-539). Dazu wurden Polymergranulate dem Prozessschritt der Altpapierauflösung zugegeben. Dabei wirken die Polymergranulate als Druckfarbensammler.

Dieses Verfahren zum Recycling von Altpapier, insbesondere zur Druckfarbenentfernung (Adsorptionsdeinking) wurde auch vorgeschlagen, bei dem eine Suspension aus 2-40 Gew.-% Altpapier und 1 - 50 Gew.-% Partikeln derart dispergiert wird, dass von dem Altpapier Druckfarbenteilchen und/oder Schmutzteilchen und/oder Mineralölteilchen abgelöst, zerkleinert sowie an die Oberfläche der Partikel angelagert werden. Die Partikel weisen ein großes Bindungsvermögen für die Druckfarbenteilchen und/oder Schmutzteilchen und/oder Mineralölteilchen auf, ihre Partikelgröße liegt im Bereich von 0,1 bis 10 mm mit angenäherter kugel-, würfel- oder zylinderförmiger Gestalt und sie bestehen aus Kunststoffen, Holz, Keramik oder Tonmineralen, vorteilhafterweise aus Polymeren, insbesondere Nylon 6,6.

Die Bindung der Druckfarbenteilchen und/oder Schmutzteilchen und/oder Mineralölteilchen an die Partikel erfolgt durch physikalische oder chemische Adsorption an deren Oberfläche. Die Partikel weisen dafür durch ihre spezifische Struktur ein hohes Bindungsvermögen auf. Diese Struktur zeichnet sich durch eine vergrößerte freie Oberfläche aus.
Weiterhin werden mit dem erhöhten Altpapieranteil in der wässrigen Suspension eine positive Wasser- und Energiebilanz und ein wirtschaftlicher Einsatz von Chemikalien erreicht. Gleichzeitig wird durch den erhöhten Feststoffanteil in der Suspension während der Dispergierung die Faser-Partikel-Reibung und die Faser-Faser-Reibung erhöht, wodurch die Druckfarbenentfernung von den Fasern intensiviert und die Druckfarbenteilchen und/oder Schmutzteilchen und/oder Mineralölteilchen gleichzeitig zu kleineren Teilchen zermahlen werden.

Durch die Verwendung von Partikeln im Stoffauflöseprozess anstelle einer späteren Flotation, an welche sich die aus der Suspension zu entfernenden Schmutz- und Störstoffe anlagern, ist es möglich, den gesamten Altpapieraufbereitungsprozess bei hohen Stoffdichten (>10 %) zu betreiben, was ein erhebliches Energieeinsparpotenzial birgt. Darüber hinaus erscheint es möglich auf mehrere Verfahrensschritte (Dispergierung, Flotation) ganz zu verzichten bzw. diese kombiniert bei hohen Stoffdichten zu betreiben.

Die mit den Druckfarbenteilchen und/oder Schmutzteilchen und/oder Mineralölteilchen behafteten Partikel sollen gereinigt werden, damit sie erneut verwendet werden können.

Dazu wurde bereits ein Verfahren zur Reinigung von derartigen Partikeln vorgeschlagen, bei dem solche Partikel, die an ihrer Oberfläche Verunreinigungen aus einem Altpapierdeinkingprozess aufweisen, in Wasser eingebracht werden und vorher, gleichzeitig oder nachher mindestens ein oberflächenaktiver Stoff bis zu einer Konzentration von 0,01 g/l bis 5 g/l zugegeben und nachfolgend ein Energieeintrag realisiert wird.

Nachteilig an diesem Verfahren ist, dass die Reinigung der Partikel nicht ausreichend rückstandsfrei erfolgt.

Die Aufgabe der vorliegenden Erfindung besteht in der Angabe eines Verfahrens zur Reinigung von Partikeln aus einem Altpapierdeinkingprozess, mit dem eine einfache und im Wesentlichen rückstandsfreie Reinigung der Partikel realisiert wird.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Reinigung von Partikeln aus einem Altpapierdeinkingprozess, werden Partikel, die an ihrer Oberfläche Verunreinigungen aufweisen, in Wasser oder in eine wässrige Lösung eingebracht und vorher, gleichzeitig oder nachher wird mindestens ein oder mehrere wasserlösliche Polymere in einer Konzentration von 0,1 g/l bis 150 g/l zugegeben, und nachfolgend ein Energieeintrag realisiert.

Vorteilhafterweise werden als Partikel Partikel aus Kunststoff, Holz, Keramik, Mineralien, Silikaten oder Glas oder solche Materialien enthaltende Partikel gereinigt, wobei noch vorteilhafterweise als Kunststoffpartikel oder Kunststoffe enthaltende Partikel aus Nylon (Polyamid 6,6), Polycarbonat, Polyethylen, Polyoxymethylen, Polypropylen gereinigt werden, wobei als Kunststoffpartikel Partikel mit Abmessungen im Bereich von 0,1 mm bis 5 cm eingesetzt werden.

Ebenfalls vorteilhafterweise werden Partikel aus einem Deinkingprozess zum Altpapierrecycling stammend eingesetzt.

Und auch vorteilhafterweise werden die wasserlöslichen Polymere vorher oder gleichzeitig mit den Partikeln in das Wasser oder die wässrige Lösung eingebracht.

Weiterhin vorteilhafterweise wird der Energieeintrag mittels Ultraschall und/oder Rührens in die Flüssigkeit realisiert, wobei vorteilhafterweise der Energieeintrag mittels Ultraschall mit einer Leistung von 15 W bis 15 kW realisiert wird.

Ebenfalls von Vorteil ist es, wenn der Energieeintrag innerhalb von 15 s bis 20 min realisiert wird.

Vorteilhaft ist es auch, wenn als wässrige Lösung Polydiallyldimethylammoniumchlorid (PDADMAC) eingesetzt wird.

Ebenfalls vorteilhaft ist es, wenn als wasserlösliche Polymere ein oder mehrere anionische oder kationische Polyelektrolyte oder eine Mischung aus anionischen und/oder kationischen Polyelektrolyten und/oder Polyampholyte eingesetzt werden, wobei in der Mischung mindestens immer ein Polyelektrolyt vorhanden ist.

Weiterhin vorteilhaft ist es, wenn als wasserlösliches Polymer ein Polykation eingesetzt wird.

Und auch vorteilhaft ist es, wenn als wasserlösliches Polymer kationische Polyelektrolyte, wie Polydiallyldimethylammoniumchlorid, Polyethylenimin, Polyvinylamin, Polyvinylammoniumchlorid, und/oder anionische Polyelektrolyte, wie Polystyrolsulfonat, Polyphosphorsäuren, Polycarbonsäuren, Polyacrylsäuren und entsprechende Co-Polymere und/oder Polyampholyte eingesetzt werden.

Von Vorteil ist es ebenfalls, wenn die wasserlöslichen Polymere mit einer Konzentration zwischen 1 g/l und 20 g/l eingesetzt werden.

Und auch von Vorteil ist es, wenn das Wasser oder die wässrige Lösung vor oder während oder nach der Zugabe der Partikel und/oder der wasserlöslichen Polymere auf eine Temperatur von 40 bis 70 °C erwärmt und während des Reinigungsprozesses bei dieser Temperatur gehalten werden.

Mit der erfindungsgemäßen Lösung ist es erstmals möglich, ein Verfahren zur Reinigung von Partikeln aus einem Altpapierdeinkingprozess zu realisieren, mit welchem die Partikel, die im Altpapierdeinkingprozess zur Trennung und zum Abtransport von Verunreinigungen, wie den Druckfarbenteilchen und/oder Schmutzteilchen und/oder Mineralölteilchen aus der Altpapiersuspension eingesetzt werden, auf einfache Art und Weise im Wesentlichen vollständig und rückstandsfrei von diesen Teilchen gereinigt werden und nachfolgend vorteilhafterweise auch wiederholt dem Prozess des Altpapierdeinking zugeführt werden können.

Bei diesen Partikeln handelt es sich in erster Linie um Partikel, die nach einem bereits vorgeschlagenen Verfahren zum Deinking von Altpapier, insbesondere zur Druckfarbenentfernung (Deinking) eingesetzt werden. Dieser Prozess ist unter dem Begriff Adsorptionsdeinking bekannt. Bei diesem Verfahren wird beispielsweise eine Suspension aus 2 - 40 Gew.-% Altpapier und 1 - 50 Gew.-% Partikeln derart dispergiert, dass von dem Altpapier Druckfarbenteilchen und/oder Schmutzteilchen und/oder Mineralölteilchen abgelöst, zerkleinert sowie an die Oberfläche der Partikel angelagert werden. Die Partikelgröße liegt im Bereich von 0,1 bis 10 mm mit angenäherter kugel-, würfel- oder zylinderförmiger Gestalt und sie bestehen aus Kunststoffen, Holz, Keramik oder Tonmineralen, vorteilhafterweise aus Polymeren, insbesondere Nylon 6,6.

Weitere Kunststoffe, die gemäß der vorliegenden Erfindung im Deinkingprozess eingesetzt werden können, sind Polycarbonat und/oder Polyethylen und/oder Polyoxymethylen und/oder Polypropylen. Die Partikel und insbesondere die Kunststoffpartikel oder kunststoffenthaltenden Partikel können dabei Abmessungen im Bereich von 0,1 mm bis 5 cm aufweisen.
Sowohl diese als auch andere Partikel aus einem Altpapierdeinkingprozess, die vorteilhafterweise Partikel aus Kunststoff, Holz, Keramik, Mineralien, Silikaten oder Glas oder solche Materialien enthaltende Partikel sind, werden dann erfindungsgemäß von den anhaftenden Verunreinigungen, wie Druckfarbenteilchen und/oder Schmutzteilchen und/oder Mineralölteilchen im Wesentlichen vollständig gereinigt.

Dazu werden diese Partikel, die die Verunreinigungen im Wesentlichen an ihrer Oberfläche aufweisen, in Wasser oder in eine wässrige Lösung gegeben, mindestens ein wasserlösliches Polymer wird vorher, gleichzeitig oder nachfolgend, vorteilhafterweise vorher oder gleichzeitig, zugegeben, wobei das wasserlösliche Polymer einzeln oder als Mischung aus mehreren wasserlöslichen Polymeren zugegeben werden kann. Die wasserlöslichen Polymere werden in einer Konzentration von 0,1 g/l bis 150 g/l vorteilhafterweise 1 bis 20 g/l und noch vorteilhafterweise bis zu einer Konzentration, die oberhalb 10g/l liegt eingesetzt. Nachfolgend wird diese Mischung in Wasser oder der wässrigen Lösung aus Wasser und dem wasserlöslichen Polymer mit einem Energieeintrag beaufschlagt.
Der Energieeintrag kann dabei vorteilhafterweise mittels Ultraschall und/oder Rührens realisiert werden, wobei im Falle des Energieeintrages mittels Ultraschall dieser vorteilhafterweise mit einer Leistung von 15 W bis 15 kW eingebracht wird.

Der Energieeintrag in die Flüssigkeit kann mittels Ultraschall, beispielsweise mittels des Ultraschallgerätes UP 200S (Hielscher Ultrasonics GmbH, Teltow, Germany), ausgestattet mit einer Sonotrode, realisiert werden. Die Sonotrode leitet die Ultraschallwellen vom Erzeugungsort in die Flüssigkeit und verbessert damit den Energieeintrag in der Flüssigkeit.

Der Energieeintrag kann weiterhin vorteilhafterweise innerhalb von 15 s bis 20 min realisiert werden. Dabei ist es auch vorteilhaft, wenn bei Energieeintrag mit einer geringeren Leistung der Eintrag eine längere Zeit realisiert wird.

Ebenfalls kann vorteilhafterweise als Flüssigkeit Wasser oder eine wässrige Lösung, wie beispielsweise Polydiallyldimethylammoniumchlorid (PDADMAC), eingesetzt werden.

Weiterhin kann es vorteilhaft sein, wenn die Flüssigkeit eine höhere Temperatur als Raumtemperatur aufweist. Dies kann beispielsweise durch Aufheizen der Flüssigkeit oder auch durch längeres Rühren der Flüssigkeit realisiert werden. Dabei sind höhere Temperaturen von 40 bis 70 °C vorteilhaft. In jedem Fall darf die Temperatur nicht über den Siedepunkt der Flüssigkeiten ansteigen.
Vorteilhafterweise wird die jeweilige höhere Temperatur während des gesamten Reinigungsprozesses beibehalten.

Bei der Verwendung von Ultraschall kommt es üblicherweise zu einem Temperaturanstieg. Dieser ist bei vielen anderen Prozessen unerwünscht, wodurch die Flüssigkeit gekühlt werden muss. Erfindungsgemäß ist ein Temperaturanstieg, durchaus bis 70°C, erwünscht und vorteilhaft für das Verfahren.

Als wasserlösliche Polymere werden erfindungsgemäß vorteilhafterweise ein oder mehrere anionische oder kationische Polyelektrolyte oder eine Mischung aus anionischen und/oder kationischen Polyelektrolyten und/oder Polyampholyten eingesetzt, wobei in der Mischung mindestens immer ein Polyelektrolyt vorhanden ist. Vorteilhafterweise werden als wasserlösliche Polymere kationische Polyelektrolyte, wie Polydiallyldimethylammoniumchlorid, Polyethylenimin, Polyvinylamin, Polyvinylammoniumchlorid, eingesetzt.
Als anionische Polyelektrolyte können Polystyrolsulfonat, Polyphosphorsäuren, Polycarbonsäuren, Polyacrylsäuren und entsprechende Co-Polymere eingesetzt werden.
Ebenso können auch Polyampholyte, die sowohl kationische als auch anionische Gruppen in einem Molekül aufweisen, eingesetzt werden.

Durch den bekannten Einsatz von oberflächenaktiven Stoffen wird in der Flüssigkeit eine Umgebung für die Verschmutzungen realisiert, die dazu führt, dass die Verunreinigungen sich von der Partikeloberfläche ablösen und an die oberflächenaktiven Stoffe anlagern. Dadurch gelangen sie in die Flüssigkeit und können leicht abgetrennt werden.

Mit der erfindungsgemäßen Lösung werden nun wasserlösliche Polymere eingesetzt, die nicht oberflächenaktiv sind.
Überraschenderweise realisieren die wasserlöslichen Polymere jedoch in der Flüssigkeit ebenfalls eine Umgebung, die dazu führt, dass die Verunreinigungen sich von der Partikeloberfläche ablösen und an die wasserlöslichen Polymere anlagern.

Zusätzlich wird durch die erfindungsgemäße Lösung noch erreicht, dass nicht nur die Partikel von den Verunreinigungen befreit werden, sondern auch die in der Flüssigkeit vorhandenen Verschmutzungsteilchen gebunden werden und in relativ kurzer Zeit sedimentieren (20-30 min). Es wird ein klarer Flüssigkeitsüberstand erreicht.

Weiterhin zusätzlich wird eine mögliche Schaumbelastung der Flüssigkeit, wie sie beim Einsatz von oberflächenaktiven Stoffen vorkommen kann, vermieden.

Nachfolgend sind die Partikel im Wesentlichen gereinigt und können wieder dem Altpapierdeinkingprozess zugeführt werden.

Die Verunreinigungen, insbesondere die Druckfarbenteilchen und/oder Schmutzteilchen und/oder Mineralölteilchen, werden mittels des erfindungsgemäßen Verfahrens im Wesentlichen vollständig oder vollständig von den Partikeln entfernt. Zusätzlich wird noch die Flüssigkeit, in der sich die Partikel befinden ebenfalls gereinigt.

Nachfolgend wird die Erfindung anhand einiger Ausführungsbeispiele näher erläutert.

### Vergleichsbeispiel 1

In einem Gefäß werden 25 ml Wasser und 0,5 g von mit Druckfarbenteilchen und/oder Schmutzteilchen und/oder Mineralölteilchen behafteten Partikeln aus Polypropylen gemischt. Die Partikel weisen eine überwiegend zylindrische Form mit Abmessungen von 0,2 - 0,4 cm auf. Die Mischung wird mit einem Rührer bei Raumtemperatur gemischt und für 1 Minute mit Ultraschall mittels UP 200S (Hielscher Ultrasonics GmbH, Teltow, Germany) bei 24 kHz und 200 W, behandelt.

Die Polymerpartikel lassen optisch noch eine Verschmutzung erkennen und es sind nur zu einem geringen Teil die Druckfarbenteilchen und/oder Schmutzteilchen und/oder Mineralölteilchen von den Partikeloberflächen entfernt. Das Wasser ist nur leicht verfärbt.

### Beispiel 1

In einem Gefäß werden 25 ml Wasser mit 25 ml einer 0,02 (entspricht 3,2 g/l) molaren Lösung von PDADMAC mit 0,5 g mit Druckfarbenteilchen und/oder Schmutzteilchen und/oder Mineralölteilchen behafteten Partikeln aus Polypropylen gemischt. Die Partikel weisen eine überwiegend zylindrische Form mit Abmessungen von 0,2 bis 0,4 cm auf. Die Mischung wird mit einem Rührer bei Raumtemperatur gemischt und für 5 Minuten mit Ultraschall mittels UP 200S (Hielscher Ultrasonics GmbH, Teltow, Germany) bei 24 kHz und 200 W, behandelt.

Die Polymerpartikel lassen optisch keine Verschmutzung mehr erkennen und es sind die Druckfarbenteilchen und/oder Schmutzteilchen und/oder Mineralölteilchen vollständig von den Partikeloberflächen entfernt. Die gereinigten Partikel schwimmen an der Wasseroberfläche. Das Wasser ist zunächst dunkel und undurchsichtig verfärbt, jedoch nach 2 Stunden sind die Druckfarbenteilchen und/oder Schmutzteilchen und/oder Mineralölteilchen am Boden des Gefäßes vollständig sedimentiert und der Wasserüberstand ist klar.

### Beispiel 2

In einem Gefäß werden 25 ml Wasser mit 25 ml einer 0,1 (entspricht 4,3 g/l) molaren Polyethyleniminlösung mit 0,5 g mit Druckfarbenteilchen und/oder Schmutzteilchen und/oder Mineralölteilchen behafteten Partikeln aus Siliciumdioxid bei einem pH Wert von 9-10 gemischt. Die Partikel weisen eine überwiegend zylindrische Form mit Abmessungen von 0,2 bis 0,4 cm auf. Die Mischung wird mit einem Rührer bei Raumtemperatur gemischt und für 15 Minuten mit Ultraschall mittels UP 200S (Hielscher Ultrasonics GmbH, Teltow, Germany) bei 24 kHz und 200 W, behandelt.

Die Polymerpartikel lassen optisch keine Verschmutzung mehr erkennen und es sind die Druckfarbenteilchen und/oder Schmutzteilchen und/oder Mineralölteilchen vollständig von den Partikeloberflächen entfernt. Das Wasser ist zunächst dunkel und undurchsichtig verfärbt, jedoch nach 30 Minuten sind die Druckfarbenteilchen und/oder Schmutzteilchen und/oder Mineralölteilchen am Boden des Gefäßes vollständig sedimentiert und der Wasserüberstand ist klar.

## Patentansprüche

1. Verfahren zur Reinigung von Partikeln aus einem Altpapierdeinkingprozess, bei dem Partikel, die an ihrer Oberfläche Verunreinigungen aufweisen, in Wasser oder in eine wässrige Lösung eingebracht werden und vorher, gleichzeitig oder nachher mindestens ein oder mehrere wasserlösliche Polymere in einer Konzentration von 0,1 g/l bis 150 g/l zugegeben wird, und nachfolgend ein Energieeintrag realisiert wird.

2. Verfahren nach Anspruch 1, bei dem als Partikel Partikel aus Kunststoff, Holz, Keramik, Mineralien, Silikaten oder Glas oder solche Materialien enthaltende Partikel gereinigt werden.

3. Verfahren nach Anspruch 2, bei dem als Kunststoffpartikel oder Kunststoffe enthaltende Partikel aus Nylon (Polyamid 6,6), Polycarbonat, Polyethylen, Polyoxymethylen, Polypropylen gereinigt werden.

4. Verfahren nach Anspruch 2, bei dem als Kunststoffpartikel Partikel mit Abmessungen im Bereich von 0,1 mm bis 5 cm eingesetzt werden.

5. Verfahren nach Anspruch 1, bei dem Partikel aus einem Deinkingprozess zum Altpapierrecycling stammend eingesetzt werden.

6. Verfahren nach Anspruch 1, bei dem die wasserlöslichen Polymere vorher oder gleichzeitig mit den Partikeln in das Wasser oder die wässrige Lösung eingebracht werden.

7. Verfahren nach Anspruch 1, bei dem der Energieeintrag mittels Ultraschall und/oder Rührens in die Flüssigkeit realisiert wird.

8. Verfahren nach Anspruch 7, bei dem der Energieeintrag mittels Ultraschall mit einer Leistung von 15 W bis 15 kW realisiert wird.

9. Verfahren nach Anspruch 1, bei dem der Energieeintrag innerhalb von 15 s bis 20 min realisiert wird.

10. Verfahren nach Anspruch 1, bei dem als wässrige Lösung Polydiallyldimethylammoniumchlorid (PDADMAC) eingesetzt wird.

11. Verfahren nach Anspruch 1, bei dem als wasserlösliche Polymere ein oder mehrere anionische oder kationische Polyelektrolyte oder eine Mischung aus anionischen und/oder kationischen Polyelektrolyten und/oder Polyampholyte eingesetzt werden, wobei in der Mischung mindestens immer ein Polyelektrolyt vorhanden ist.

12. Verfahren nach Anspruch 11, bei dem als wasserlösliches Polymer ein Polykation eingesetzt wird.

13. Verfahren nach Anspruch 1, bei dem als wasserlösliches Polymer kationische Polyelektrolyte, wie Polydiallyldimethylammoniumchlorid, Polyethylenimin, Polyvinylamin, Polyvinylammoniumchlorid, und/oder anionische Polyelektrolyte, wie Polystyrolsulfonat, Polyphosphorsäuren, Polycarbonsäuren, Polyacrylsäuren und entsprechende Co-Polymere und/oder Polyampholyte eingesetzt werden.

14. Verfahren nach Anspruch 1, bei dem die wasserlöslichen Polymere mit einer Konzentration zwischen 1 g/l und 20 g/l eingesetzt werden.

15. Verfahren nach Anspruch 1, bei dem das Wasser oder die wässrige Lösung vor oder während oder nach der Zugabe der Partikel und/oder der wasserlöslichen Polymere auf eine Temperatur von 40 bis 70 °C erwärmt und während des Reinigungsprozesses bei dieser Temperatur gehalten werden.

## Claims

1. A method of decontaminating particles from a wastepaper deinking process, which method comprises introducing particles that are surface contaminated into water or an aqueous solution and beforehand, at the same time or subsequently admixing at least one or more water-soluble polymers in a concentration of 0.1 g/l to 150 g/l and subsequently realizing an energy input.

2. A method according to Claim 1 wherein particles consisting of plastic, wood, ceramics, minerals, silicates or glass or containing such materials are decontaminated.

3. A method according to Claim 2, wherein the particles decontaminated as consisting of or containing plastics are of nylon-6,6, polycarbonate, polyethylene, polyoxymethylene, polypropylene.

4. A method according to Claim 2, wherein particles used as consisting of or containing plastics have dimensions in the range from 0.1 mm to 5 cm.

5. A method according to Claim 1, wherein the particles used come from a deinking process for wastepaper recycling.

6. A method according to Claim 1, wherein the water-soluble polymers are introduced into the water or the aqueous solution before or at the same time as the particles.

7. A method according to Claim 1, wherein the energy input is realized via ultrasound and/or stirring into the liquid.

8. A method according to Claim 7, wherein the energy input is realized via ultrasound having a power rating of 15 W to 15 kW.

9. A method according to Claim 1, wherein the energy input is realized within from 15 s to 20 min.

10. A method according to Claim 1, wherein polydiallyldimethylammonium chloride (PDADMAC) is used as aqueous solution.

11. A method according to Claim 1, wherein the water-soluble polymers used comprise one or more anionic or cationic polyelectrolytes or a mixture of anionic and/or cationic polyelectrolytes and/or polyampholytes, while one polyelectrolyte at least is at all times present in the mixture.

12. A method according to Claim 11, wherein the polycation is used as water-soluble polymer.

13. A method according to Claim 1, wherein the water-soluble polymer used comprises cationic polyelectrolytes, such as polydiallyldimethylammonium chloride, polyethyleneimine, polyvinylamine, polyvinylammonium chloride, and/or anionic polyelectrolytes, such as polystyrenesulfonate, polyphosphoric acids, polycarboxylic acids, polyacrylic acids and corresponding copolymers and/or polyampholytes.

14. A method according to Claim 1, wherein the water-soluble polymers are used at a concentration between 1 g/l and 20 g/l.

15. A method according to Claim 1, wherein the water or the aqueous solution are heated to a temperature of 40 to 70°C before or during or after admixing the particles and/or the water soluble polymers and are maintained at that temperature during the decontamination process.

## Revendications

1. Procédé de purification de particules issues d'un procédé de désencrage de vieux papiers, selon lequel des particules qui comportent des impuretés sur leur surface sont introduites dans de l'eau ou dans une solution aqueuse, et au moins un ou plusieurs polymères solubles dans l'eau sont ajoutés avant, simultanément ou après en une concentration de 0,1 g/l à 150 g/l, puis un apport d'énergie est réalisé.

2. Procédé selon la revendication 1, selon lequel des particules de plastique, de bois, de céramique, de minéraux, de silicates ou de verre ou des particules contenant de tels matériaux sont purifiées en tant que particules.

3. Procédé selon la revendication 2, selon lequel des particules de nylon (polyamide 6,6), polycarbonate, polyéthylène, polyoxyméthylène, polypropylène sont purifiées en tant que particules de plastique ou contenant des plastiques.

4. Procédé selon la revendication 2, selon lequel des particules ayant des dimensions dans la plage allant de 0,1 mm à 5 cm sont utilisées en tant que particules de plastique.

5. Procédé selon la revendication 1, selon lequel des particules issues d'un procédé de désencrage pour le recyclage de vieux papiers sont utilisées.

6. Procédé selon la revendication 1, selon lequel les polymères solubles dans l'eau sont introduits avant ou simultanément avec les particules dans l'eau ou la solution aqueuse.

7. Procédé selon la revendication 1, selon lequel l'apport d'énergie dans le liquide est réalisé par ultrasons et/ou agitation.

8. Procédé selon la revendication 7, selon lequel l'apport d'énergie est réalisé par ultrasons avec une puissance de 15 W à 15 kW.

9. Procédé selon la revendication 1, selon lequel l'apport d'énergie est réalisé en 15 s à 20 min.

10. Procédé selon la revendication 1, selon lequel du chlorure de polydiallyldiméthylammonium (PDADMAC) est utilisé en tant que solution aqueuse.

11. Procédé selon la revendication 1, selon lequel un ou plusieurs polyélectrolytes anioniques ou cationiques ou un mélange de polyélectrolytes anioniques et/ou cationiques et/ou de polyampholytes sont utilisés en tant que polymères solubles dans l'eau, au moins un polyélectrolyte étant toujours présent dans le mélange.

12. Procédé selon la revendication 11, selon lequel un polycation est utilisé en tant que polymère soluble dans l'eau.

13. Procédé selon la revendication 1, selon lequel des polyélectrolytes cationiques, tels que le chlorure de polydiallyldiméthylammonium, la polyéthylène-imine, la polyvinylamine, le chlorure de polyvinylammonium, et/ou des polyélectrolytes anioniques, tels que le sulfonate de polystyrène, les acides polyphosphoriques, les acides polycarboxyliques, les acides polyacryliques et les copolymères correspondants et/ou des polyampholytes sont utilisés en tant que polymère soluble dans l'eau.

14. Procédé selon la revendication 1, selon lequel les polymères solubles dans l'eau sont utilisés en une concentration comprise entre 1 g/l et 20 g/l.

15. Procédé selon la revendication 1, selon lequel l'eau ou la solution aqueuse est portée à une température de 40 à 70 °C avant ou pendant ou après l'ajout des particules et/ou des polymères solubles dans l'eau, et maintenue à cette température pendant le procédé de purification.
